# EUROPEAN PATENT APPLICATION

(11) **EP 3 576 414 A1**
(43) Date of publication of application: **04.12.2019**
(21) Application number: 19177317.5
(22) Date of filing: 29.05.2019
(51) Int. Cl.: H04N 21/218, H04N 21/2343, H04N 21/41, H04N 21/432, H04N 21/434, H04N 21/44, H04N 21/4402, H04N 21/442, H04N 21/466, H04N 21/4728, H04N 21/81, H04N 21/845

(54) **METHOD OF TRANSMITTING 3-DIMENSIONAL 360 DEGREE VIDEO DATA, DISPLAY APPARATUS USING THE METHOD, AND VIDEO STORAGE APPARATUS USING THE METHOD**

(30) Priority: 30.05.2018 KR 20180062095
(71) Applicant: Samsung Electronics Co., Ltd., Gyeonggi-do 16677 (KR)
(72) Inventor: BAK, Bonggil, Gyeonggi-do (KR)
(74) Representative: Appleyard Lees IP LLP

(57) **Abstract**

Provided is a method of splitting a three-dimensional (3D) 360° video into a plurality of tile units and streaming video data of the tile units from a video storage apparatus to a display apparatus.

## Description

### CROSS-REFERENCE TO RELATED APPLICATION(S)

This application is based on and claims priority to Korean Patent Application No. 10-2018-0062095, filed on May 30, 2018, in the Korean Intellectual Property Office, the disclosure of which is incorporated by reference herein in its entirety.

### BACKGROUND

### 1. Field

The disclosure relates to a method of transmitting 3-dimensional (3D) 360° video data, a display apparatus using the method, and a video storage apparatus using the method.

More particularly, the disclosure relates to a method of splitting a 3D 360° video into a plurality of tile units and transmitting video data of the tile units from a video storage apparatus to a display apparatus, a display apparatus using the method, and a video storage apparatus using the method.

### 2. Description of Related Art

Display apparatuses are increasingly used to, for example, play various video games and view videos. Specifically, among the display apparatuses, virtual reality (VR) apparatuses are increasingly used to play various video games and view videos. In particular, due to immersive experiences provided by a VR technology, contents using a 3-dimensional (3D) stereoscopic technique are being broadly popularized. In some cases, to view a video, video data needs to be transmitted from a video storage apparatus to a display apparatus, e.g., a VR apparatus.

For example, the video storage apparatus includes a media player capable of reading content stored in a media storage medium, and a content server apparatus. Herein, examples of the media storage medium may include a Blu-ray disc (BD) and a digital video disc (DVD). An example of the display apparatus may include a head mounted display (HMD).

When video data is transmitted from a video storage apparatus to a display apparatus through a wireless communication network, a resolution of streamed video data is limited to a certain value or less depending on network performance. For example, when video data is transmitted from a BD player to a HMD through a wireless communication network conforming to high efficiency video coding (HEVC) standards, up to 4K resolution may be supported.

Although it may differ depending on standard types of the wireless communication network, the resolution of the streamed video data is limited as described above.

Therefore, in order to provide a high-quality video to a user of a display apparatus, a method and apparatus capable of streaming high-resolution video data is required.

For example, when video data corresponding to a 3D 360° video is streamed from a video storage apparatus to a HMD, the HMD displays only a partial area of the 3D 360° video, which corresponds to a certain viewpoint. In this case, a method and apparatus by which the HMD may display a certain area of the 3D 360° video, which corresponds to a viewpoint desired by a user, with high image quality is required.

### SUMMARY

Provided is a method and apparatus capable of streaming a high-resolution 3-dimensional (3D) 360° video.

More particularly, provided is a method and apparatus capable of displaying a certain area of a 3D 360° video, which corresponds to a viewpoint desired by a user, with high image quality.

Additional aspects will be set forth in part in the description which follows and, in part, will be apparent from the description, or may be learned by practice of the presented embodiment of the disclosure.

According to an aspect of the disclosure, there is provided a method transmitting video data of a three-dimensional (3D) 360° video from a video storage apparatus to a display apparatus, the method comprising: acquiring first information about a first area of the 3D 360° video, the first area corresponding to a first field of view (FoV); acquiring second information about at least one second area of the 3D 360° video, the at least one second area corresponding to a second FoV different from the first FoV; setting priorities of a plurality of tiles corresponding to the first area and the at least one second area of the 3D 360° video, the 3D 360° video being divided into the plurality of tiles; and transmitting a plurality of tile data corresponding to the first area and the at least one second area from the video storage apparatus to the display apparatus in order of the priorities set for the plurality of tiles.

The setting of the priorities of the plurality of tiles may comprise setting a priority of at least one tile corresponding to the first area to be higher than a priority of at least one tile corresponding to the at least one second area.

The transmitting may comprise transmitting, as a first stream, at least one tile data corresponding to at least one tile corresponding to the first area, and transmitting, as a second stream, at least one tile data corresponding to each of the at least one second area.

The priorities may be set based on the first FoV corresponding to a viewpoint of a user of the display apparatus and the second FoV corresponding to a view point set by a producer of content corresponding to the video data.

The priorities may be set based on a FoV history of users who have viewed content corresponding to the video data.

The priorities may be set based on an automatic content recognition (ACR) result with respect to content corresponding to the video data.

The priorities may be set based on at least one of a character location of content corresponding to the video data or a plot of the content corresponding to the video data.

The 3D 360° video may comprise a left-view video, which is a 360° video corresponding to a left view, and a right-view video, which is a 360° video corresponding to a right view, and wherein the video data may be split and encoded in the plurality of tiles based on a motion constrained tile (MCT) technique conforming to high efficiency video coding (HEVC) standards.

The transmitting may comprise: compressing, into one stream by using a multi-view codec (MVC), at least one tile data corresponding to at least one tile corresponding to the first area of the left-view video and at least one tile data corresponding to at least one tile corresponding to the first area of the right-view video; and transmitting the one stream to the display apparatus.

The display apparatus may comprise a head-mounted display (HMD).

According to another aspect of the disclosure, there is provided a display apparatus for streaming video data of a three-dimensional (3D) 360° video, the display apparatus comprising: a display; a communicator configured to communicate with a video storage apparatus storing the video data; a controller comprising at least one processor configured to execute one or more instructions to: control the communicator to receive a plurality of tile data corresponding to a plurality of tiles corresponding to a first area and at least one second area of the 3D 360° video, and information about priorities of the plurality of tiles, the first area corresponding to a first field of view (FoV)and the at least one second area corresponding to a second FoV different from the first FoV, and control a display to output a video corresponding to at least one of the plurality of tiles based on the information about the priorities of the plurality of tiles.

A priority of at least one tile corresponding to the first area may be higher than a priority of at least one tile corresponding to the at least one second area.

The priorities may be set based on the first FoV corresponding to a viewpoint of a user of the display apparatus and the second FoV set by a producer of content corresponding to the video data.

The priorities may be set based on a FoV history of users who have viewed content corresponding to the video data.

The 3D 360° video may comprise a left-view video, which is a 360° video corresponding to a left view, and a right-view video, which is a 360° video corresponding to a right view, and wherein the video data may be split and encoded in the plurality of tiles based on a motion constrained tile (MCT) technique conforming to high efficiency video coding (HEVC) standards.

The controller may be further configured to control a memory to store at least one tile data corresponding to the first area that is preferentially received based on the information about the priorities.

The controller may be further configured to determine at least one of the plurality of tile data to be preferentially stored in a memory based on the information about the priorities.

The display apparatus may comprise a head-mounted display (HMD).

According to another aspect of the disclosure, there is provided a video storage apparatus for streaming video data of a three-dimensional (3D) 360° video to a display apparatus, the video storage apparatus comprising: a memory storing the video data; a communicator configured to communicate with the display apparatus; and a controller comprising at least one processor configured to execute one or more instructions to acquire first information about a first area of the 3D 360° video, the first area corresponding to a first field of view (FoV), acquire second information about at least one second area of the 3D 360° video, the at least one second area corresponding to a second FoV different from the first FoV, set priorities of a plurality of tiles corresponding to the first area and the at least one second area of the 3D 360° video, the 3D 360° video being divided into the plurality of tiles, and control a plurality of tile data corresponding to the first area and the at least one second area to be transmitted to the display apparatus in order of the priorities set for the plurality of tiles.

The controller may be further configured to set priorities of the plurality of tiles in such a manner that a priority of at least one tile corresponding to the first area is higher than a priority of at least one tile corresponding to the at least one second area.

The priorities may be set based on the first FoV corresponding to a viewpoint of a user of the display apparatus and the second FoV set by a producer of content corresponding to the video data.

According to another aspect of the disclosure, there is provided a method for streaming video data of a three-dimensional (3D) 360° video from a video storage apparatus to a display apparatus, the method comprising: receiving a plurality of tile data corresponding to a plurality of tiles corresponding to a first area and at least one second area of the 3D 360° video, the first area corresponding to a first field of view (FoV) and the at least one second area corresponding to a second FoV different from the first FoV, receiving information about priorities of the plurality of tiles, and controlling a display to output a video corresponding to at least one of the plurality of tiles based on the information about the priorities of the plurality of tiles.

The priorities may be set based on the first FoV corresponding to a viewpoint of a user of the display apparatus and the second FoV set by a producer of content corresponding to the video data.

According to another aspect of the disclosure, there is provided a method for transmitting video data of a three-dimensional (3D) 360° video having a plurality of frames from a video storage apparatus to a display apparatus, the method comprising: dividing each of the plurality of frames into a plurality of sections; determining a first set of sections, among the plurality of sections, corresponding to a first area of the 3D 360° video, the first area corresponding to a first field of view (FoV); determining a second set of sections, among the plurality of sections, corresponding to a second area of the 3D 360° video, the second area corresponding to a second field of view (FoV); and transmitting, for each of the frame, a portion of the video data corresponding to the first set of sections and the second set of sections based on a priority information set for the first area and the second area.

The first FoV may correspond to a viewpoint of a user of the display apparatus and the second FoV may correspond to a view point set by a producer of content corresponding to the video data.

Each of the plurality of frames may comprise a left eye frame and a right eye frame.

The first set of sections and the second set of sections may have overlapping sections.

According to another aspect of the disclosure, there is provided a video storage apparatus for transmitting video data of a three-dimensional (3D) 360° video having a plurality of frames to a display apparatus, the video storage apparatus comprising: a memory storing the video data; a communicator configured to communicate with the display apparatus; and a controller comprising at least one processor configured to execute one or more instructions to: divide each of the plurality of frames into a plurality of sections; determine a first set of sections, among the plurality of sections, corresponding to a first area of the 3D 360° video, the first area corresponding to a first field of view (FoV); determine a second set of sections, among the plurality of sections, corresponding to a second area of the 3D 360° video, the second area corresponding to a second field of view (FoV); and transmit, for each of the frame, a portion of the video data corresponding to the first set of sections and the second set of sections based on a priority information set for the first area and the second area.

According to another aspect of the disclosure, there is provided a method for transmitting video data of a three-dimensional (3D) 360° video having a plurality of frames from a video storage apparatus to a display apparatus, the method comprising: dividing each of the plurality of frames into a plurality of sections; determining a first set of sections, among the plurality of sections, corresponding to a first area of the 3D 360° video, the first area corresponding to a first field of view (FoV) of a user of the display apparatus; and transmitting, for each of the plurality of frames, only a portion of the video data corresponding to the first set of sections.

According to another aspect of the disclosure, there is provided a video storage apparatus for transmitting video data of a three-dimensional (3D) 360° video having a plurality of frames to a display apparatus, the video storage apparatus comprising: a memory storing the video data; a communicator configured to communicate with the display apparatus; and a controller comprising at least one processor configured to execute one or more instructions to: divide each of the plurality of frames into a plurality of sections; determine a first set of sections, among the plurality of sections, corresponding to a first area of the 3D 360° video, the first area corresponding to a first field of view (FoV) of a user of the display apparatus; and transmit, for each of the plurality of frames, only a portion of the video data corresponding to the first set of sections.

### BRIEF DESCRIPTION OF THE DRAWINGS

The above and other aspects, features, and advantages of certain embodiment of the disclosure will be more apparent from the following description taken in conjunction with the accompanying drawings, in which:
FIG. 1 is a schematic diagram of a display apparatus for displaying a 360° video and at least a partial area of the 360° video, according to an embodiment of the disclosure;
FIG. 2 is a block diagram showing data transmission and reception between a video storage apparatus and a display apparatus, according to an embodiment of the disclosure;
FIG. 3A is a block diagram of a video storage apparatus according to an embodiment of the disclosure;
FIG. 3B is a block diagram of a display apparatus according to an embodiment of the disclosure;
FIG. 4 is a block diagram of a video storage apparatus according to another embodiment of the disclosure;
FIG. 5A is a diagram for describing a method of splitting a 360° video, according to an embodiment of the disclosure;
FIG. 5B is a diagram for describing a method of splitting a 360° video, according to another embodiment of the disclosure;
FIG. 6 is a detailed block diagram of a display apparatus according to an embodiment of the disclosure;
FIG. 7 is a diagram for describing three-dimensional (3D) 360° video data used in an embodiment of the disclosure;
FIG. 8 is a diagram for describing an operation of generating video data to be streamed;
FIG. 9 is a diagram for describing another operation of generating video data to be streamed;
FIG. 10 is a diagram for describing an operation of streaming video data from a video storage apparatus to a display apparatus;
FIG. 11 is a diagram for describing another operation of streaming video data from a video storage apparatus to a display apparatus;
FIG. 12 is a diagram for describing another operation of streaming video data from a video storage apparatus to a display apparatus; and
FIG. 13 is a flowchart of a method of transmitting 3D 360° video data, according to an embodiment of the disclosure.

### DETAILED DESCRIPTION

Hereinafter, the disclosure will be described in detail by explaining embodiments of the disclosure with reference to the attached drawings. The disclosure may, however, be embodied in many different forms and should not be construed as being limited to the embodiments of the disclosure set forth herein. In the drawings, parts not related to the disclosure are not illustrated for clarity of explanation, and like reference numerals denote like elements.

It will be understood that when an element is referred to as being "connected to" another element, it may be "directly connected to" the other element or be "electrically connected to" the other element through an intervening element. It will be further understood that the terms "includes" and/or "including", when used herein, specify the presence of stated elements, but do not preclude the presence or addition of one or more other elements, unless the context clearly indicates otherwise. Throughout the disclosure, the expression "at least one of a, b or c" indicates only a, only b, only c, both a and b, both a and c, both b and c, all of a, b, and c, or variations thereof.

Herein, expressions such as "some embodiments of the disclosure" and "an embodiment of the disclosure" do not always designate the same embodiment(s) of the disclosure.

Some embodiments of the disclosure may be described in terms of functional blocks and various processing operations. Some or all of the functional blocks may be implemented by any number of hardware and/or software elements configured to perform certain functions. For example, the functional blocks of the disclosure may be implemented by one or more processors or microprocessors, or circuit elements for certain functions. As another example, the functional blocks of the disclosure may be implemented using any programming or scripting language. The functional blocks may be implemented using various algorithms executed by the one or more processor. Furthermore, the disclosure might employ known technologies for electronic settings, signal processing, and/or data processing. Terms such as "module", "element", and "unit" may be widely used and are not limited to mechanical and physical elements.

In addition, connection lines or connection members between elements shown in the drawings illustrate functional connections and/or physical or circuit connections, and connections between elements may be represented by replaceable or additional various functional connections, physical connections, or circuit connections in an actual apparatus.

Reference will now be made in detail to embodiments of the disclosure, examples of which are illustrated in the accompanying drawings.

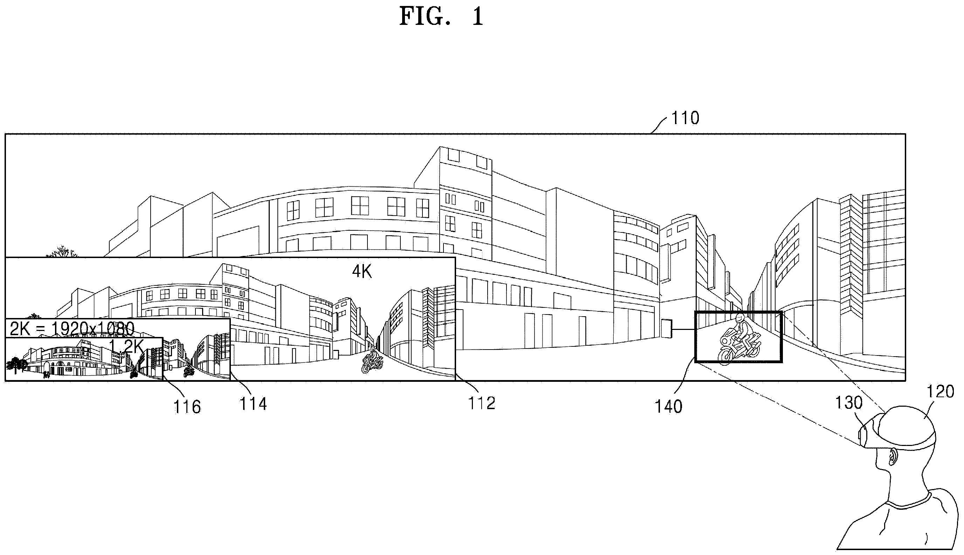

FIG. 1 is a schematic diagram of a display apparatus for displaying a 360° video and at least a partial area of the 360° video, according to an embodiment of the disclosure.

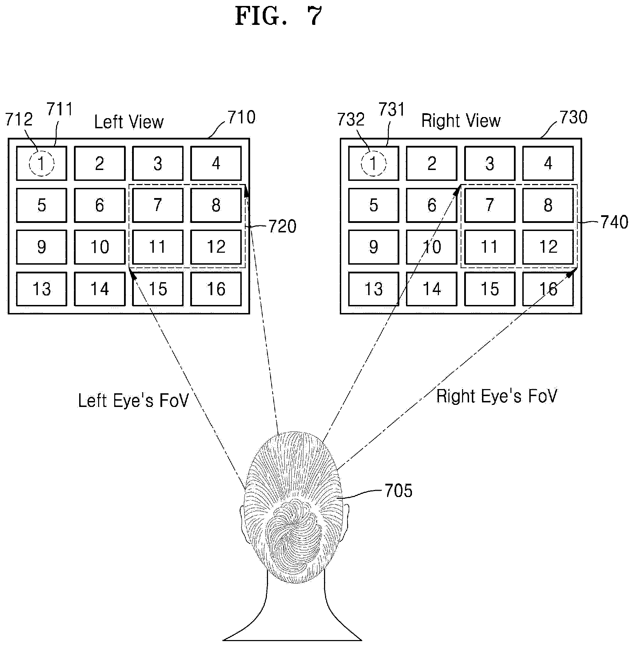

The display apparatus according to an embodiment of the disclosure may include various types of electronic apparatuses for visually outputting certain videos. For example, the display apparatus according to an embodiment of the disclosure may include a virtual reality (VR) apparatus. Herein, the VR apparatus refers to a display apparatus for providing virtual reality including a simulated environment or situation to a user and enabling the user to immersively interact with the simulated environment or situation. The VR apparatus may include a head-mounted display (HMD). Currently, the VR apparatus is increasingly used to play various video games or view videos. The VR apparatus may display a 3-dimensional (3D) video to enable the user to immersively experience the simulated environment or situation. Meanwhile, a 3D 360° video is a 360° video using a 3D stereoscopic technique, and will be described in detail below with reference to FIG. 7.

In the following description, a VR apparatus will be described as an example of the display apparatus. Specifically, a HMD will be described as an example of the VR apparatus.

Referring to FIG. 1, a user 120 may view a video corresponding to a certain video 110 on a display apparatus, e.g., a HMD 130. In FIG. 1, for example, the certain video 110 is a 360° video.

In a display apparatus for receiving and reproducing original video data, a resolution of the original video data experienced by a user is limited by a resolution of the display apparatus. Specifically, when the resolution of the original video data exceeds the maximum resolution of the display apparatus, although the size of data required to record and transmit the original video is increased, the quality of a video output from the display apparatus is not improved.

To view the video corresponding to the 360° video 110 on a VR apparatus such as the HMD 130, initially, the HMD 130 needs to receive video data corresponding to the 360° video 110 through a network, and output content by using the received video data.

The HMD 130 may display only, for example, a partial area (e.g., an area 140) of the 360° video 110. That is, due to characteristics of the HMD 130, the HMD 130 displays only the partial area 140 corresponding to a viewpoint of the user 120.

When the HMD 130 outputs a video (e.g., a video corresponding to the area 140) based on the maximum resolution thereof, the resolution of the output video is mostly lower than the resolution of the original video. That is, although a stationary display apparatus such as a general TV has a high resolution, a display apparatus such as the HMD 130 has a resolution lower than that of the stationary display apparatus.

In general, a video resolution for achieving optimal image quality in a reproduction environment using a HMD is known to be at least about 8K.

Currently, video streaming in a normal home network environment generally supports up to 2K resolution. In a fast network, video streaming supports up to 4K resolution. However, a network infrastructure capable of streaming a video exceeding the maximum resolution of 4K has not been provided as a home network. Therefore, a method and apparatus for streaming a 8K video at an original resolution thereof to view a 360° video for VR experience with optimal image quality on a display apparatus such as a VR apparatus may not be easily implemented at present.

That is, when the original video such as the 360° video 110 has of 8K resolution, considering a current network environment, the HMD 130 has to stream video data generated by converting the 360° video 110 having 8K resolution into a 360° video 112 having 4K resolution, or video data generated by converting the 360° video 110 having 8K resolution into a 360° video 114 having 2K resolution, or video data generated by converting the 360° video 110 having 8K resolution into a 360° video 116 having 1.2K resolution. In this case, a video having optimal image quality (e.g., 8K resolution) desired to be achieved by the HMD 130 may not be reconstructed by using the video data streamed by the HMD 130. Therefore, the user 120 of the HMD 130 has no choice but to reproduce a video having a low resolution.

In an embodiment of the disclosure, the above-described problem due to limitation of a resolution of streamed video data in a current network environment may be solved. Specifically, in an embodiment of the disclosure, a method of transmitting video data, by which a display apparatus such as an augmented reality (AR) apparatus may achieve optimal image quality in a 3D 360° video viewing environment, a display apparatus using the method, and a video storage apparatus using the method may be provided and will now be described in detail with reference to the attached drawings.

Referring to FIG. 1, when the user 120 views a 360° video by using a display apparatus (e.g., the HMD 130), the relationship between a resolution of an original video and an area reproduced by the HMD 130 is illustrated. Herein, the user 120 is a person who views the 360° video 110.

To realize about 2K resolution for the user 120 who is wearing the HMD 130, the original video, i.e., the 360° video 110, needs to have 8K resolution.

As described above, a current general home network environment may transmit a video of up to 4K resolution. Therefore, the current network technology is not sufficiently fast to transmit a 8K resolution video four times larger than a 4K resolution video.

A method capable of solving the above problem includes a steaming method utilizing a motion constrained tile (MCT) technique conforming to high efficiency video coding (HEVC) standards, based on a fact that the user 120 views only a field of view (FoV) of the original video, i.e., the 360° video 110. That is, the HMD 130 may steam video data corresponding to the area 140 and having 8K resolution like the 360° video 110. As such, in an embodiment of the disclosure, video data having a high resolution may be streamed without increasing the size of the video data to be streamed.

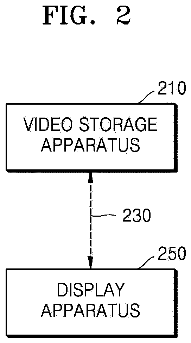

The partial video streaming method will be described in detail below with reference to FIGS. 2 to 5B.

FIG. 2 is a block diagram showing data transmission and reception between a video storage apparatus 210 and a display apparatus 250, according to an embodiment of the disclosure.

Referring to FIG. 2, the display apparatus 250 according to an embodiment of the disclosure may receive video data from the video storage apparatus 210 according to an embodiment of the disclosure. Specifically, the display apparatus 250 streams video data stored in the video storage apparatus 210. Herein, streaming is a method of transmitting data (e.g., video data). Specifically, streaming refers to a method of splitting data into a plurality of elements and transmitting the data elements like a stream. Therefore, streaming may be used when data such as voice or video data needs to be reproduced in real time.

Herein, the video storage apparatus 210 refers to an electronic apparatus having stored therein various contents viewable to a user, e.g., a video game and a movie. Specifically, the video data stored in the video storage apparatus 210 may correspond to content reproduced on a screen visually recognizable by the user, e.g., a video game, a movie, a commercial video, and a music video. The video data may include a plurality of frame data each representing a frame image output at a certain timing. For example, when 60 frames are consecutively reproduced in 1 minute, video data for configuring 1-minute content may include 60 frame data aligned by time. Herein, a video may include a plurality of still images, and one frame may be one of the still images of the video (e.g., a 3D 360° video or the 360° video 110), which is displayed at a certain timing.

The video storage apparatus 210 may include an electronic apparatus capable of reading certain content stored in a media storage medium inserted thereinto. Herein, examples of the media storage medium include a Blu-ray disc (BD) and a digital video disc (DVD). In this case, the video storage apparatus 210 may be, for example, a BD player or a DVD player.

The video storage apparatus 210 may refer to an electronic apparatus having stored the content in memory thereof or in a server apparatus accessible through a network. In this case, the video storage apparatus 210 may have a form of a server apparatus capable of providing streaming services.

The display apparatus 250 refers to an electronic apparatus connected to the video storage apparatus 210 through a wired or wireless network, to display content.

Specifically, the display apparatus 250 according to an embodiment of the disclosure may be a display apparatus capable of displaying video data received (e.g., via streaming) from the video storage apparatus 210 through a wireless network. Specifically, the display apparatus 250 may include a VR apparatus, e.g., the HMD 130 of FIG. 1.

The display apparatus 250 receives video data corresponding to content from the video storage apparatus 210, and displays a video by using the received video data.

In the following description, for example, the display apparatus 250 according to an embodiment of the disclosure is a HMD (e.g., the HMD 130).

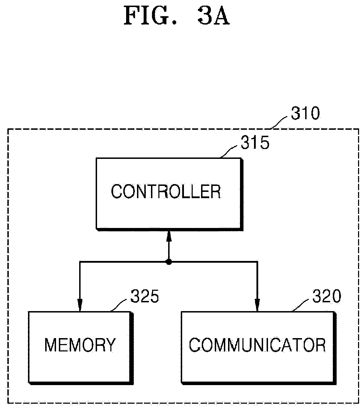

FIG. 3A is a block diagram of a video storage apparatus 310 according to an embodiment of the disclosure.

The video storage apparatus 310 illustrated in FIG. 3A corresponds to the video storage apparatus 210 illustrated in and described above in relation to FIG. 2, and thus the descriptions provided above in relation to FIG. 2 will not be repeated herein.

Referring to FIG. 3A, the video storage apparatus 310 may have a form of a server apparatus capable of providing data transmission services (e.g., streaming services).

The video storage apparatus 310 splits a 3D 360° video into a plurality of tile units, and transmits video data of the tile units to a display apparatus.

In an embodiment of the disclosure, as a method of transmitting video data from the video storage apparatus 310 to the display apparatus, tile data generated by splitting the video data may be consecutively transmitted, i.e., streamed. In the following description, for example, a streaming method is used as a video data transmission method.

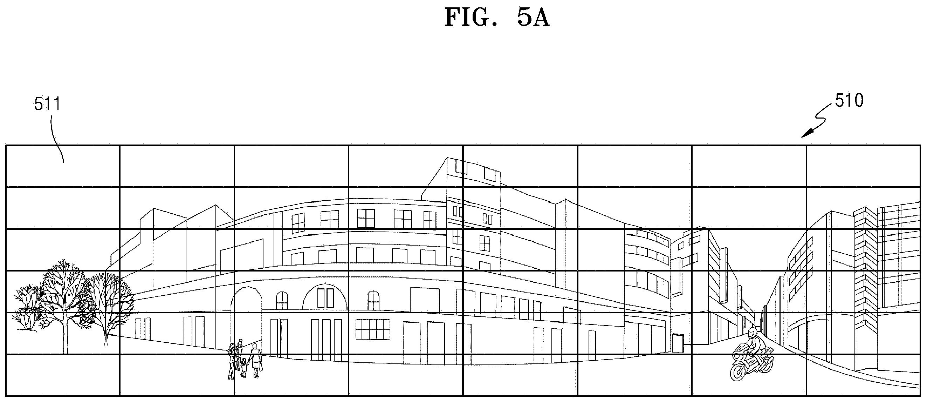

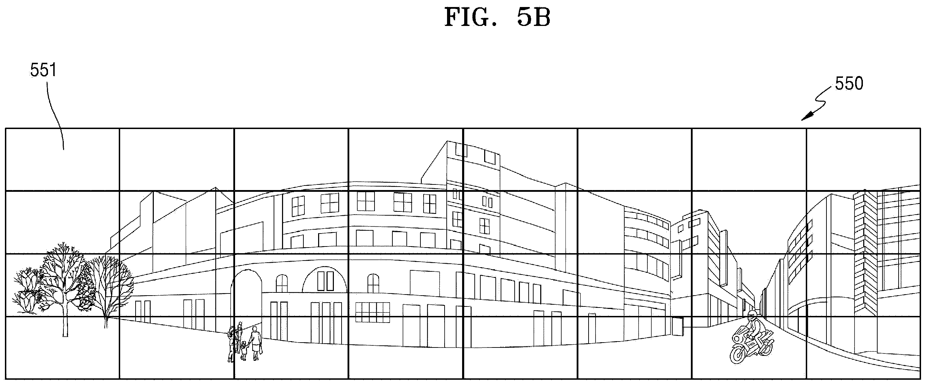

Referring to FIG. 3A, the video storage apparatus 310 includes a controller 315, a communicator 320, and a memory 325. The memory 325 stores video data. Herein, the video data is data corresponding to the 3D 360° video for configuring content. When the 3D 360° video is split into a plurality of tile units, the video data to be stored in the memory 325 may be generated in the tile units. The video data of the tile units will be described in detail below with reference to FIGS. 5A and 5B.

Specifically, the memory 325 may include at least one of flash memory, a hard disk, a multimedia card micro, card-type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, a magnetic disc, or an optical disc.

Alternatively, the video storage apparatus 310 may have stored the video data corresponding to the 3D 360° video for configuring the content, through the communicator 320 in an external server apparatus (not shown) capable of data transmission and reception. In this case, the memory 325 may buffer the video data received from the external server apparatus.

The communicator 320 communicates with the display apparatus (e.g., the display apparatus 250 of FIG. 2). The communicator 320 may communicate with an external electronic apparatus, a server apparatus, or the like through a network.

Specifically, the communicator 320 may communicate with external apparatuses through a wireless network conforming to certain standards. Herein, the certain standards may be communication standards for transmitting and receiving video data, e.g., HEVC standards. That is, the communicator 320 may communicate with external apparatuses through a wireless network conforming to the HEVC standards.

The communicator 320 may communicate with an external electronic apparatus (not shown) or a server (not shown) in a wired or wireless manner. The communicator 320 according to an embodiment of the disclosure includes at least one communication module such as a short-range wireless communication module, a wired communication module, a mobile communication module, or a broadcast reception module. Herein, the at least one communication module refers to a communication module capable of transmitting and receiving data through a network conforming to communication standards such as Bluetooth, wireless local area network (WLAN) (or Wi-Fi), wireless broadband (Wibro), world interoperability for microwave access (Wimax), code division multiple access (CDMA), or wideband CDMA (WCDMA).

The controller 315 stores one or more instructions, and includes at least one processor (not shown) configured to execute the one or more stored instructions.

The controller 315 acquires information about a first area of the 3D 360° video, the first area corresponding to a FoV of a user of the display apparatus (e.g., the display apparatus 250). The controller 315 also acquires information about at least one second area of the 3D 360° video, the at least one second area being different from the first area and corresponding to at least one viewpoint. Thereafter, the controller 315 sets priorities of a plurality of tiles corresponding to the first area and the at least one second area. The controller 315 may control a plurality of tile data corresponding to the plurality of tiles corresponding to the first area and the at least one second area, to be transmitted to the display apparatus (e.g., the display apparatus 250) in the order of the priorities.

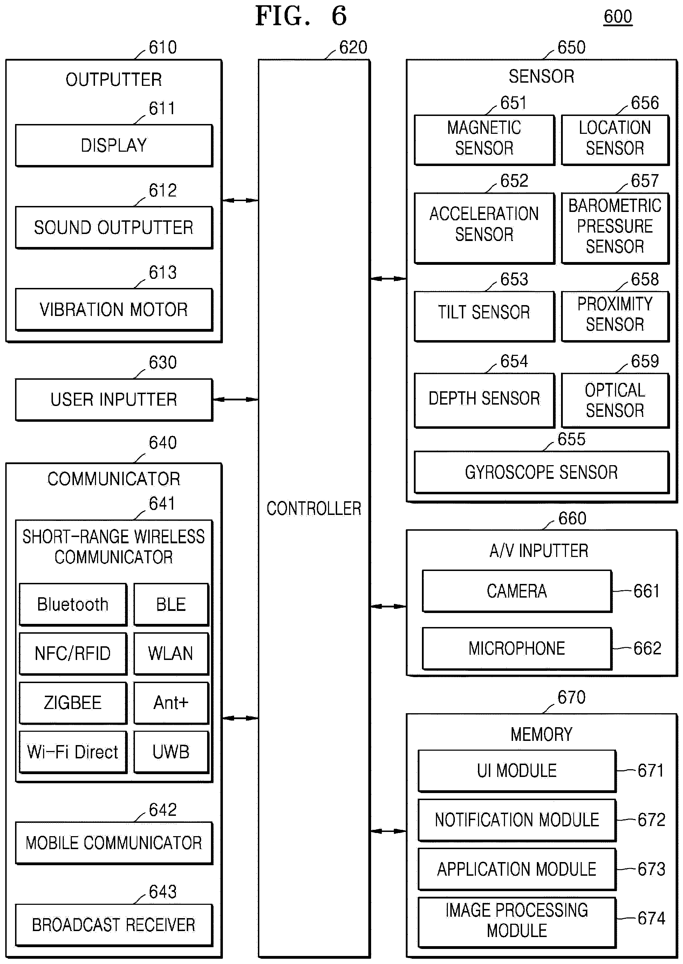

Herein, the information about the first area may be acquired by the display apparatus (e.g., the display apparatus 250) and be transmitted to the video storage apparatus 310. The operation, performed by the display apparatus (e.g., the display apparatus 250), of acquiring the information about the first area will be described below in detail with reference to FIG. 6. The information about the at least one second area may be acquired based on at least one of settings of a content producer, a FoV history of users who have viewed the content, an automatic content recognition (ACR) result with respect to the content, a character location of the content, or a plot of the content.

Specifically, the controller 315 may set the priorities of the plurality of tiles in such a manner that the priority of at least one tile corresponding to the first area is higher than the priority of at least one tile corresponding to the at least one second area.

The operations performed by the video storage apparatus 310 according to an embodiment of the disclosure will now be described in detail.

Initially, the tile units of the video data stored and streamed by the video storage apparatus 310 will now be described with reference to FIGS. 5A and 5B.

FIG. 5A is a diagram for describing a method of splitting a 360° video, according to an embodiment of the disclosure, and FIG. 5B is a diagram for describing a method of splitting a 360° video, according to another embodiment of the disclosure.

In an embodiment of the disclosure, the video storage apparatus 310 may split video data to be transmitted, by using a streaming method utilizing a MCT technique conforming to HEVC standards. Herein, the MCT technique is a technique for transmitting only a partial area of a whole video to transmit a 360° video for VR experience. Specifically, based on the MCT technique, a whole-screen video is split into a plurality of partial areas and data transmission is performed in units of video data corresponding to a partial area. Herein, the partial areas may be referred to as tiles.

Referring to FIG. 5A, in an embodiment of the disclosure, a 360° video 510 may be split into 8 pieces on a horizontal axis and 6 pieces on a vertical axis, i.e., a total of 6x8=48 pieces. Herein, the split areas may serve as tiles, and data transmission (e.g., streaming) may be performed in units of video data corresponding to, for example, a partial video 511 corresponding to one tile.

Referring to FIG. 5B, in an embodiment of the disclosure, a 360° video 550 may be split into 8 pieces on a horizontal axis and 4 pieces on a vertical axis, i.e., a total of 4x8=32 pieces. Herein, data transmission (e.g., streaming) may be performed in units of video data corresponding to, for example, a partial video 551 corresponding to one tile.

In addition to the above-described examples, the 360° video may be split into various numbers of pieces. Although the 360° video is split into equal-sized tiles in FIGS. 5A and 5B, the 360° video may also be split into a plurality of different-sized tiles.

When the 360° video is split into a plurality of tiles, the number of tiles may vary depending on, for example, settings of the video storage apparatus 310, the type of standards of a network connected to the communicator 320 of the video storage apparatus 310, a resolution allowable by the network connected to the communicator 320 of the video storage apparatus 310, settings of the display apparatus (e.g., the display apparatus 250) for receiving the video data streamed from the video storage apparatus 310, the video storage apparatus 310, and/or user settings of the display apparatus (e.g., the display apparatus 250).

In the following description, for example, a 360° video is split into 4 pieces on a horizontal axis and 4 pieces on a vertical axis, i.e., a total of 4x4=16 pieces, and thus the size of one tile is 1/16 of that of the 360° video.

In an embodiment of the disclosure, a 3D 360° video is split into a plurality of tile units. The 3D 360° video will now be described in detail with reference to FIG. 7.

FIG. 7 is a diagram for describing 3D 360° video data used in an embodiment of the disclosure.

The 3D 360° video is a video generated using a 3D stereoscopic technique, and refers to a video including a pair of a 360° video 710 corresponding to a left view and a 360° video 730 corresponding to a right view to provide a stereoscopic or perspective effect to a user 705 who views the video.

In the following description, the 360° video 710 corresponding to the left view will be referred to as 'a left-view 360° video 710', and a 360° video 730 corresponding to the right view will be referred to as 'a right-view 360° video 730'.

In an embodiment of the disclosure, the video storage apparatus 310 may split each of the left-view 360° video 710 and the right-view 360° video 730 into n tiles (where n is an integer). For example, the video storage apparatus 310 may split each of the left-view 360° video 710 and the right-view 360° video 730 into 16 tiles as illustrated in FIG. 7.

An identifier (ID) for identifying each of the 16 tiles and/or 16 tile data may be given to the tile data. For example, in the left-view 360° video 710, a value of '1' may be given to a top-left tile 711 as an ID 712. Correspondingly, in the right-view 360° video 730, a value of '1' may be given to a top-left tile 731 as an ID 732. In FIG. 7, integers from 1 to 16 are used and indicated as IDs of the 16 tiles.

In the following description, for example, each of the left-view 360° video 710 and the right-view 360° video 730 included in the 3D 360° video is split into 16 tiles as illustrated in FIG. 7.

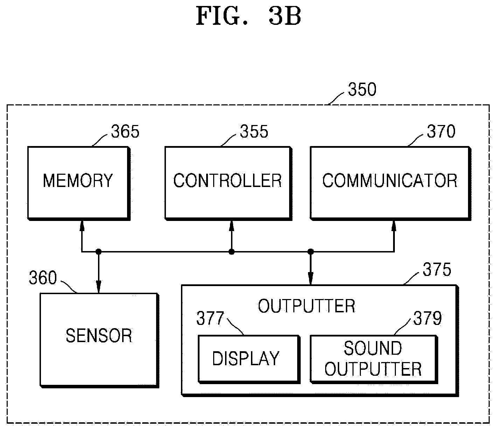

FIG. 3B is a block diagram of a display apparatus 350 according to an embodiment of the disclosure.

The display apparatus 350 illustrated in FIG. 3B corresponds to the display apparatus 250 illustrated in and described above in relation to FIG. 2, and thus the descriptions provided above in relation to FIG. 2 will not be repeated herein.

Referring to FIG. 3B, the display apparatus 350 includes a memory 365, a controller 355, a communicator 370, and a display 377.

The display apparatus 350 may further include a sensor 360.

The display 377 displays a video corresponding to content. Specifically, the display 377 may 3-dimensionally display a video corresponding to a partial area of a 3D 360° video for configuring the content.

The communicator 370 communicates with a video storage apparatus (e.g., the video storage apparatus 310) storing video data. Specifically, the communicator 370 may communicate with an external apparatus (e.g., the video storage apparatus 310 or a server apparatus (not shown)) through a network.

Specifically, the communicator 370 may communicate with external apparatuses through a wireless network conforming to certain standards. Herein, the certain standards may be communication standards for transmitting and receiving video data, e.g., HEVC standards. That is, the communicator 370 may communicate with external apparatuses through a wireless network conforming to the HEVC standards.

Specifically, the communicator 370 may communicate with an external electronic apparatus (not shown) or a server (not shown) in a wired or wireless manner. The communicator 370 according to an embodiment of the disclosure includes at least one communication module such as a short-range wireless communication module, a wired communication module, a mobile communication module, or a broadcast reception module. Herein, the at least one communication module refers to a communication module capable of transmitting and receiving data through a network conforming to communication standards such as Bluetooth, WLAN (or Wi-Fi), Wibro, Wimax, CDMA, or WCDMA.

The memory 365 stores streamed video data.

The memory 365 may include at least one of certain data, or programs including instructions for executing certain operations. The memory 365 may further include at least one processor (not shown) configured to execute a certain program.

Specifically, the memory 365 may include at least one of flash memory, a hard disk, a multimedia card micro, card-type memory (e.g., SD or XD memory), RAM, SRAM, ROM, EEPROM, PROM, magnetic memory, a magnetic disc, or an optical disc.

The controller 355 stores one or more instructions, and includes at least one processor (not shown) configured to execute the one or more stored instructions.

Herein, the controller 355 controls video data corresponding to a plurality of tiles corresponding to a first area of the 3D 360° video, the first area corresponding to a FoV of a user of the display apparatus 350, and at least one second area of the 3D 360° video, the at least one second area being different from the first area and corresponding to at least one viewpoint, and information about priorities of the plurality of tiles, to be streamed from the video storage apparatus 310. The controller 315 also controls a video corresponding to at least one of the plurality of streamed tiles to be output on the display 377 based on the information about the priorities.

The display apparatus 350 may include a sensor 360 and an outputter 375 including a sound outputter 379 and the display 377.

The sensor 360 may detect a state of the user who is wearing the display apparatus 350 (e.g., a HMD). Specifically, the sensor 360 may include at least one sensor capable of detecting, for example, a posture of the user, motion of the user, an angle of a head of the user, a height of the head of the user, or a location of the head of the user, to detect the state of the user.

The sensor 360 transmits the detection result to the controller 355. Then, the controller 355 may acquire information about the first area (e.g., the area 140 of FIG. 1) corresponding to the FoV of the user of the display apparatus 350 based on the detection result.

Specifically, the sensor 360 may include at least one sensor to detect a viewpoint, a viewing area, and/or a viewing direction of the user of the display apparatus 350 (e.g., the user 120 of FIG. 1).

Specifically, the sensor 360 may include at least one of a magnetic sensor (not shown), an acceleration sensor (not shown), a tilt sensor (not shown), a depth sensor (not shown), a gyroscope sensor (not shown), a proximity sensor (not shown), a temperature sensor (not shown), or an iris recognition sensor (not shown). The sensor 360 transmits the detection result of the at least one sensor included therein, to the controller 355. Then, the controller 355 may acquire the information about the first area (e.g., the area 140 of FIG. 1) by determining a FoV corresponding to a partial area of the original 3D 360° video, which is viewed by the user, based on the detection result.

The outputter 375 may output visual and auditory signals. The outputter 375 may include the display 377 and the sound outputter 379.

Specifically, the sound outputter 379 may output audio data corresponding to the content. The sound outputter 379 may output a sound signal related to a function performed by the display apparatus 350 (e.g., call signal reception sound, message reception sound, or notification sound). The sound outputter 379 may include, for example, a speaker or a buzzer.

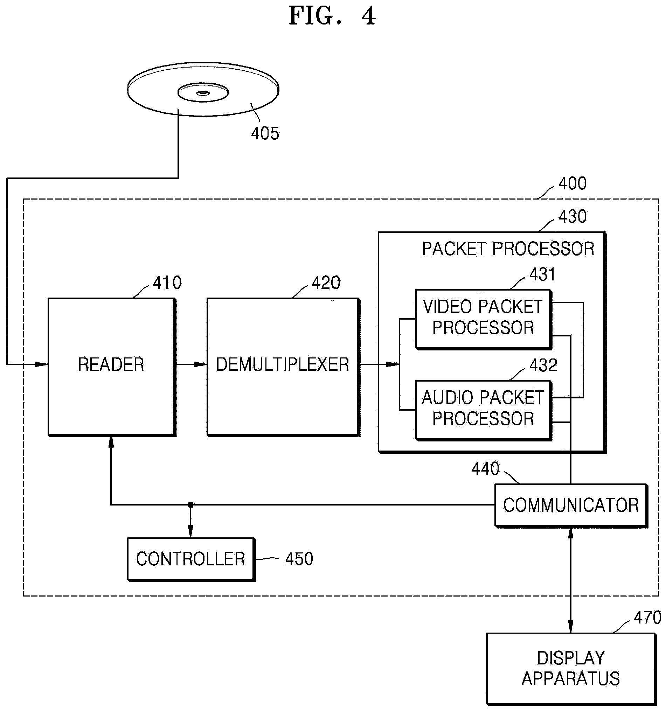

FIG. 4 is a block diagram of a video storage apparatus 400 according to another embodiment of the disclosure.

The video storage apparatus 400 according to an embodiment of the disclosure may be a media player for inserting a media storage medium thereinto and reading video data corresponding to certain content recorded and stored in the media storage medium. Specifically, the video storage apparatus 400 may be, for example, a BD player or a DVD player. The video storage apparatus 400 illustrated in FIG. 4 corresponds to the video storage apparatus 210 or 310 described above in relation to FIG. 2 or 3A, and thus the descriptions provided above in relation to FIG. 2 or 3A will not be repeated herein. A display apparatus 470 corresponds to the display apparatus 350 described above in relation to FIG. 3B, and thus the descriptions provided above in relation to FIG. 3B will not be repeated herein.

Referring to FIG. 4, the video storage apparatus 400 includes a reader 410, a demultiplexer 420, a packet processor 430, a communicator 440, and a controller 450. A media storage medium 405 is inserted into the video storage apparatus 400.

In FIG. 4, the media storage medium 405 inserted into the video storage apparatus 400, the communicator 440, and the controller 450 may correspond to the memory 325, the communicator 320, and the controller 315 described above in relation to FIG. 3A, respectively. Thus, the descriptions provided above in relation to FIG. 3A will not be repeated to describe the video storage apparatus 400 illustrated in FIG. 4.

The reader 410 may read video data stored in the media storage medium 405, in certain units. Herein, examples of the media storage medium 405 include a BD and a DVD as described above. The video data stored in the media storage medium 405 may correspond to certain content, and include video data for configuring a movie, a commercial video, a video game, a music video, an application, or the like, or audio/video (A/V) data including both of video data and audio data.

For example, the media storage medium 405 may have stored therein multiplexed video data of an audio stream and a video stream.

The demultiplexer 420 may receive the read video data from the reader 410, and de-multiplex the received video data. For example, the media storage medium 405 may have a multiplexed stream of an audio stream and a video stream stored therein as the video data. Then, the demultiplexer 420 may extract an audio stream and a video stream from the read video data.

The packet processor 430 receives the audio and video streams extracted by the demultiplexer 420, and process each of the audio and video streams. Specifically, the packet processor 430 includes a video packet processor 431 and an audio packet processor 432.

The video packet processor 431 may process the video stream to split the whole-screen video data into a plurality of tile data corresponding to a plurality of tiles as described above in relation to FIGS. 5A and 5B.

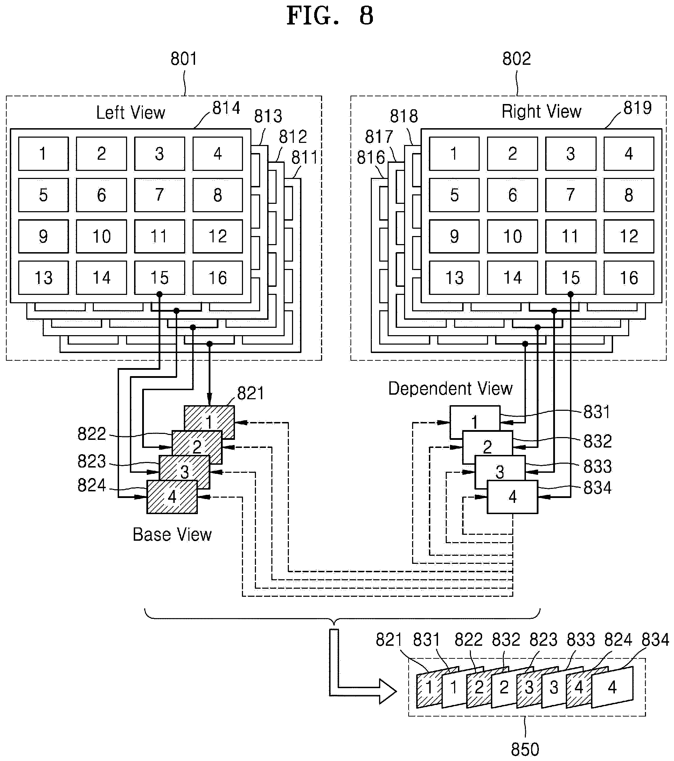

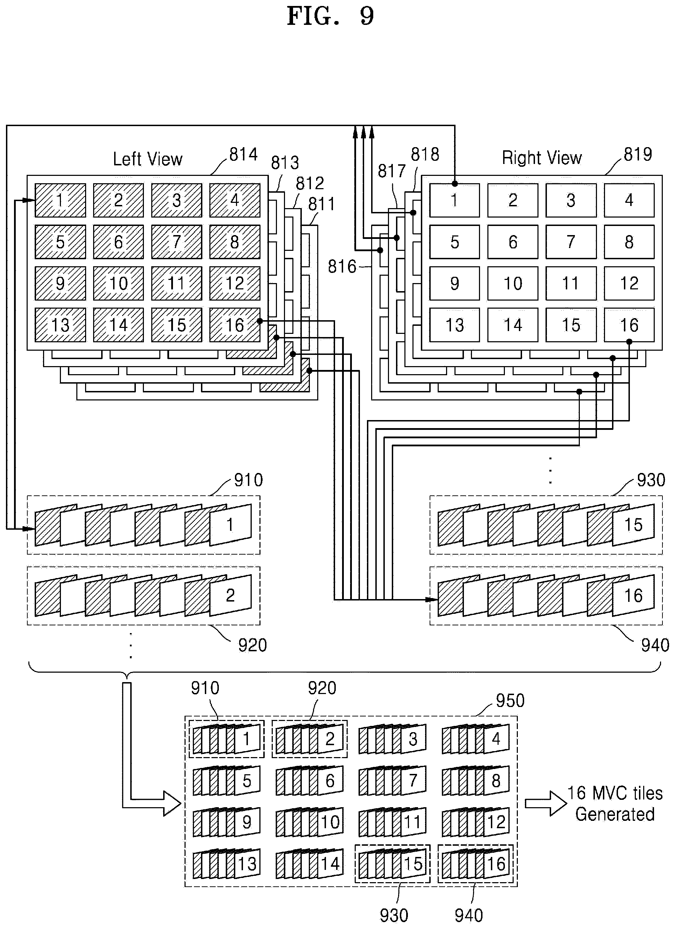

Referring to FIG. 5A, when the original and whole-screen 360° video 510 is split into 8 pieces on a horizontal axis and 6 pieces on a vertical axis, i.e., a total of 48 pieces, video data corresponding to the top-left partial video 511 may be one tile data. Therefore, in FIG. 5A, video data representing the 360° video 510 may be split into 48 tile data. A plurality of tile data for configuring a whole-screen 360° video will be described in detail below with reference to FIGS. 8 and 9.

The audio packet processor 432 may divide and process the received audio stream in units of packets.

The media storage medium 405 may have the video data stored therein in tile units. In this case, the above-described operations of the demultiplexer 420 and the packet processor 430 for generating the video data of the tile units may be omitted.

The controller 450 controls overall operations of the video storage apparatus 400.

Specifically, the controller 450 may store one or more instructions, and include at least one processor configured to execute the one or more instructions.

Specifically, the controller 450 acquires information about a first area of a 3D 360° video, the first area corresponding to a FoV of a user of the display apparatus 470. The controller 450 also acquires information about at least one second area of the 3D 360° video, the at least one second area being different from the first area and corresponding to at least one viewpoint. Thereafter, the controller 450 sets priorities of a plurality of tiles corresponding to the first area and the at least one second area. The controller 450 may control a plurality of tile data corresponding to the plurality of tiles corresponding to the first area and the at least one second area, to be transmitted to the display apparatus 470 in the order of the priorities.

The communicator 440 may communicate with an external electronic apparatus (not shown) or a server (not shown) in a wired or wireless manner. The communicator 440 according to an embodiment of the disclosure includes at least one communication module such as a short-range wireless communication module, a wired communication module, a mobile communication module, or a broadcast reception module. Herein, the at least one communication module refers to a communication module capable of transmitting and receiving data through a network conforming to communication standards such as Bluetooth, WLAN (or Wi-Fi), Wibro, Wimax, CDMA, or WCDMA.

In an embodiment of the disclosure, the communicator 440 transmits the plurality of tile data generated in tile units, to the display apparatus 470 based on the priorities set by the controller 450 under control of the controller 450.

FIG. 6 is a detailed block diagram of a display apparatus 600 according to an embodiment of the disclosure. The block diagram of the display apparatus 600 illustrated in FIG. 6 corresponds to a detailed version of that of the display apparatus 350 illustrated in FIG. 3B. Thus, like names (e.g., 'controller') in FIGS. 3B and 6 denote like elements. Therefore, the descriptions provided above in relation to FIG. 3B will not be repeated to describe the display apparatus 600.

As illustrated in FIG. 6, the display apparatus 600 according to an embodiment of the disclosure may include an outputter 610, a controller 620, a user inputter 630, a communicator 640, a sensor 650, an A/V inputter 660, and a memory 670. The sensor 650 may also be referred to as a sensor unit.

The above-mentioned elements will now be described one by one.

The outputter 610 is used to output an audio signal, a video signal, or a vibration signal, and may include, for example, a display 611, a sound outputter 612, and a vibration motor 613.

The display 611 may visually display information processed by the display apparatus 600.

In an embodiment of the disclosure, the display 611 may display a 3D 360° video. Specifically, the display 611 may 3-dimensionally display a video corresponding to the partial area 140 of the original 3D 360° video 110 (see FIG. 1).

The display 611 may display content corresponding to a notification event (e.g., notification message information).

The display 611 may display the content in the form of augmented reality (AR), mixed reality (MR), or virtual reality (VR). The display 611 may display an indicator indicating that the notification event has occurred.

When the display 611 and a touchpad are layered to configure a touchscreen, the display 611 may be used not only as an output device but also as an input device. The display 611 may include at least one of a liquid crystal display (LCD), a thin film transistor-LCD (TFT-LCD), an organic light-emitting diode (OLED), a flexible display, a 3D display, or an electrophoretic display. The display apparatus 600 may include two or more displays 611 depending on the configuration of the display apparatus 600. For example, when the display apparatus 600 is configured as a HMD, the display apparatus 600 may include a display corresponding to a left-eye lens and a display corresponding to a right-eye lens.

The sound outputter 612 outputs audio data received from the communicator 640 or stored in the memory 670. The sound outputter 612 outputs a sound signal related to a function performed by the display apparatus 600 (e.g., call signal reception sound, message reception sound, or notification sound). The sound outputter 612 may include, for example, a speaker or a buzzer.

The vibration motor 613 may output a vibration signal. For example, the vibration motor 613 may output a vibration signal corresponding to output of video data or audio data (e.g., call signal reception sound or message reception sound). The vibration motor 613 may output a vibration signal when touch is input to the touchscreen.

The outputter 610 may provide the content corresponding to the notification event according to a providing method determined based on motion pattern information of a user.

The controller 620 generally controls overall operations of the display apparatus 600. For example, the controller 620 may control the outputter 610, the user inputter 630, the communicator 640, the sensor 650, and the A/V inputter 660 by executing programs stored in the memory 670.

In an embodiment of the disclosure, the controller 620 controls video data corresponding to a plurality of tiles corresponding to a first area of the 3D 360° video, the first area corresponding to a FoV of the user of the display apparatus 600, and at least one second area of the 3D 360° video, the at least one second area being different from the first area and corresponding to at least one viewpoint, and information about priorities of the plurality of tiles, to be streamed from a video storage apparatus (e.g., the video storage apparatus 310). The controller 620 also controls a video corresponding to at least one of the plurality of streamed tiles to be output on the display 611 based on the information about the priorities.

Specifically, the controller 620 may determine a viewpoint of the user or a FoV of the user by using at least one of acceleration information, tilt information, or location information measured by the display apparatus 600. After acquiring information about the first area corresponding to the FoV of the user, the information may be transmitted to the video storage apparatus 310. Then, the video storage apparatus 310 may stream at least one tile data corresponding to the first area to the display apparatus 600. As such, the display apparatus 600 may receive the at least one tile data corresponding to the first area and streamed from the video storage apparatus (e.g., the video storage apparatus 310). Thereafter, the controller 620 may control a video corresponding to the first area to be displayed on the display 611 by using the at least one received tile data.

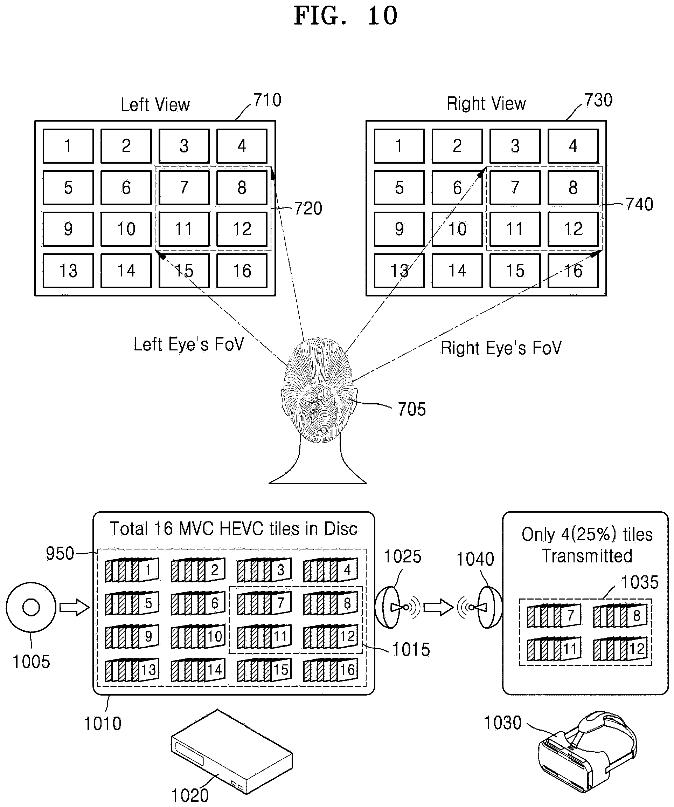

An operation of displaying a video of a certain area under control of the controller 620 will be described in detail below with reference to FIGS. 10 to 12.

The controller 620 may control the display 611 to display received notification message information, based on a signal output from the sensor 650.

The controller 620 may determine whether the user is wearing the display apparatus 600, based on a signal output from at least one sensor included in the sensor 650, and control the sensor 650 to sense motion of the user, upon determining that the user is wearing the display apparatus 600.

The user inputter 630 refers to a means used by the user to input data for controlling the display apparatus 600. For example, the user inputter 630 may include, for example, a key pad, a dome switch, a touchpad (e.g., a capacitive overlay, resistive overlay, infrared beam, surface acoustic wave, integral strain gauge, or piezoelectric touchpad), a jog wheel, or a jog switch, but is not limited thereto.

In an embodiment of the disclosure, the user inputter 630 may receive a user input for requesting to reproduce streamed content. Herein, the user input may include at least one of a motion input, a touch input, a key input, a voice input, or a multi-input, but is not limited thereto. The user may set a head up motion as the user input for requesting to output the content.

The communicator 640 may include one or more elements for enabling communications between the display apparatus 600 and the video storage apparatus (e.g., the video storage apparatus 310). For example, the communicator 640 may include a short-range wireless communicator 641, a mobile communicator 642, and a broadcast receiver 643.

The short-range wireless communicator 641 may include, for example, a Bluetooth communicator, a Bluetooth low energy (BLE) communicator, a near field communicator, a WLAN (or Wi-Fi) communicator, a Zigbee communicator, an infrared data association (IrDA) communicator, a Wi-Fi direct (WFD) communicator, an ultra wideband (UWB) communicator, and an Ant+ communicator, but is not limited thereto.

The mobile communicator 642 transmits and receives radio signals to and from at least one of a base station, an external device, or a server in a mobile communication network. Herein, the radio signals may include various types of data based on transmission and reception of voice call signals, video call signals, and text/multimedia messages.

The broadcast receiver 643 receives broadcast signals and/or broadcast-related information through broadcast channels from outside. The broadcast channels may include satellite channels and terrestrial channels. According to another embodiment of the disclosure, the display apparatus 600 may not include the broadcast receiver 643.

In an embodiment of the disclosure, the communicator 640 may receive video data (e.g., a stream including a plurality of tile data) streamed from the video storage apparatus (e.g., the video storage apparatus 310).

The sensor 650 may include at least one of a magnetic sensor 651, an acceleration sensor 652, a tilt sensor 653, a depth sensor 654, a gyroscope sensor 655, a location sensor (e.g., a global positioning system (GPS)) 656, a barometric pressure sensor 657, a proximity sensor 658, or an optical sensor 659, but is not limited thereto. The sensor 650 may also include, for example, a temperature sensor, an ambient light sensor, a pressure sensor, and an iris recognition sensor. Functions of the sensors may be intuitively inferred from their names by one of ordinary skill in the art, and thus detailed descriptions thereof will not be provided herein.

The A/V inputter 660 is used to input an audio signal or a video signal, and may include, for example, a camera (or image sensor) 661 and a microphone 662. The camera (or image sensor) 661 may obtain still images or image frames of a moving picture in a video call mode or a camera mode. The images captured by the camera (or image sensor) 661 may be processed by the controller 620 or an image processor (not shown).

The image frames processed by the camera (or image sensor) 661 may be stored in the memory 670 or be transmitted through the communicator 640 to outside. Two or more cameras (or image sensors) 661 may be included depending on the configuration of the display apparatus 600.

The microphone 662 receives an external sound signal and processes the same into electrical voice data. For example, the microphone 662 may receive the sound signal from an external device or a user. The microphone 662 may use various noise cancellation algorithms to remove noise generated while the external sound signal is being received.

The memory 670 may store programs for processing and control operations of the controller 620, and store input/output data (e.g., a list of not-output contents, a list of output contents, captured images, biometric information, user schedule information, and user life pattern information).

In an embodiment of the disclosure, the memory 670 may store streamed video data of tile units.

The memory 670 may include at least one of flash memory, a hard disk, a multimedia card micro, card-type memory (e.g., SD or XD memory), RAM, SRAM, ROM, EEPROM, PROM, magnetic memory, a magnetic disc, or an optical disc. The display apparatus 600 may use a web storage or a cloud server which serves as the memory 670 on the Internet.

The programs stored in the memory 670 may be classified into a plurality of modules, e.g., a user interface (UI) module 671, a notification module 672, an application module 673, and an image processing module 674, based on functions thereof.

The UI module 671 may provide Uls or graphical Uls (GUIs) specialized for applications and operable in the display apparatus 600. The notification module 672 may generate a notification signal indicating that an event of the display apparatus 600 has occurred. The notification module 672 may output the notification signal using the display 611 in the form of a video signal, using the sound outputter 612 in the form of an audio signal, or using the vibration motor 613 in the form of a vibration signal.

The application module 673 may store at least one application executable in the display apparatus 600. The at least one application stored in the application module 673 may be executed under control of the controller 620.

The image processing module 674 may acquire, for example, object information, edge information, atmosphere information, and color information of a captured image by analyzing the captured image.

In FIGS. 7 to 12, for example, an original 3D 360° video is split into 4 pieces on a horizontal axis and 4 pieces on a vertical axis, i.e., a total of 16 tiles. Therefore, original video data includes a total of 16 tile data.

In relation to FIGS. 8 to 12, the video storage apparatus 310 illustrated in FIG. 3A and the display apparatus 350 illustrated in FIG. 3B will be described as examples of a video storage apparatus and a display apparatus.

As described above in relation to FIG. 7, each of the left-view 360° video 710 and the right-view 360° video 730 of the 3D 360° video may be split into 16 tiles, and 16 tile data corresponding to the 16 tiles may be generated.

When a user is wearing a display apparatus such as a HMD, the user views the left-view 360° video 710 with the left eye and views the right-view 360° video 730 with the right eye. Due to characteristics of the HMD, a display (not shown) corresponding to a left-eye lens displays a left eye's FoV 720 of the left-view 360° video 710, and a display (not shown) corresponding to a right-eye lens displays a right eye's FoV 740 of the right-view 360° video 730. Herein, the left eye's FoV 720 and the right eye's FoV 740 are synchronized with each other and thus correspond to each other as illustrated in FIG. 7.

Therefore, in an embodiment of the disclosure, two tiles (e.g., a tile of the left-view 360° video 710 and a tile of the right-view 360° video 730) corresponding to a same location on the screen may be compressed together by using a multi-view codec (MVC). Specifically, the tile of the left-view 360° video 710 and the tile of the right-view 360° video 730 the same location on the screen may be configured as a base-view video and a dependent-view video, and be compressed using the MVC codec. For instance, the tile of the left-view 360° video 710 may be configured as a base-view and the tile of the right-view 360° video 730 may be configured as a dependent-view. Alternatively, the tile of the left-view 360° video 710 and the tile of the right-view 360° video 730 corresponding to a same location on the screen may be configured as a dependent-view video and a base-view video, and be compressed using the MVC codec. For instance, the tile of the left-view 360° video 710 may be configured as a dependent-view and the tile of the right-view 360° video 730 may be configured as a base-view.

In an embodiment of the disclosure, IDs 1 to 16 may be given to a plurality of tiles included in one 360° video.

Specifically, IDs 1 to 16 may be given to a plurality of tile data, and information about priorities may be generated by ordering the IDs of the tile data.

Specifically, in relation to FIG. 7 and FIGS. 8 to 12 to be described below, IDs expressed as numbers 1 to 16 may be sequentially given to a plurality of tiles included in one 360° video as illustrated in FIG. 7. Although numbers are used as the IDs in FIGS. 7 to 12, all differently-expressible values such as symbols, letters, shapes, and colors may also be used as the IDs.

The 360° video data may be generated in units of one scene or a frame output at a certain timing. In FIGS. 8 to 12, for example, video data for configuring content includes a plurality of frames consecutively output as time passes.

FIG. 8 is a diagram for describing an operation of generating video data to be streamed.

As described above, two tile data having the same ID may be compressed together.

Referring to FIG. 8, each of a plurality of frames 801 corresponding to a left view may correspond to the left-view 360° video 710 described above in relation to FIG. 7, and each of a plurality of frames 802 corresponding to a right view may correspond to the right-view 360° video 730 described above in relation to FIG. 7. To reproduce a content, a frame 811 may be initially output and then frames 812, 813, and 814 may be consecutively output. To reproduce a content, a tile data 821 may be initially output and then tile data 822, 823, and 824 may be consecutively output. Herein, when a timing t1 is followed by timings t2, t3, and t4, tile data 821 of the frame 811 may be an image output at the timing t1, tile data 822 of the frame 812 may be an image output at the timing t2, tile data 823 of the frame 813 may be an image output at the timing t3, and tile data 824 of the frame 814 each of the frames 814 and 824 may be an image output at the timing t4.

In an embodiment of the disclosure, in frames output as time passes, tile data corresponding to the same location (on original images) may be sequentially compressed together by using a MVC codec.

In an embodiment of the disclosure, tile data having the same ID may be separately stored.

Referring to FIG. 8, to MVC-compress tile data having an ID 15, tile data 821 corresponding to the timing t1 and having the ID 15 in the left-view frame 811, and tile data 831 corresponding to the timing t1 and having the ID 15 in the right-view frame 816 may be arranged together as shown in a block 850. Then, tile data 822 corresponding to the timing t2 and having the ID 15 in the left-view frame 812, and tile data 832 corresponding to the timing t2 and having the ID 15 in the right-view frame 817 may be arranged together as shown in the block 850. Thereafter, tile data 823 corresponding to the timing t3 and having the ID 15 in the left-view frame 813, and tile data 833 corresponding to the timing t3 and having the ID 15 in the right-view frame 818 may be arranged together as shown in the block 850. Lastly, tile data 824 corresponding to the timing t4 and having the ID 15 in the left-view frame 814, and tile data 834 corresponding to the timing t4 and having the ID 15 in the right-view frame 819 may be arranged together as shown in the block 850.

The controller 315 of the video storage apparatus 310 may MVC-compress the tile data arranged as shown in the block 850. The MVC compression may be performed in units of two tile data corresponding to a certain timing (e.g., the tile data 821 corresponding to the timing t1 and having the ID 15 in the left-view frame 811, and the tile data 831 corresponding to the timing t1 and having the ID 15 in the right-view frame 816). Alternatively, the plurality of tile data corresponding to certain timings and consecutively arranged as shown in the block 850 may be MVC-compressed at the same time. For example, 8 tile data may be MVC-compressed at the same time in units of 4 frames. Alternatively, 4 tile data may be MVC-compressed at the same time in units of 2 frames.

A media storage medium (e.g., the media storage medium 405 of FIG. 4) may have stored therein tile data MVC-compressed in the form of the block 850. In this case, the controller 315 may merely read and use the tile data stored in the media storage medium.

FIG. 9 is a diagram for describing another operation of generating video data to be streamed. In FIGS. 8 and 9, like reference numerals denote like elements.

Referring to FIG. 9, in addition to the tile data having the ID 15 in FIG. 8, tile data having other IDs may also be MVC-compressed in the manner described above in relation to FIG. 8.

Referring to FIG. 9, in a plurality of frames, tile data having an ID 1 may be grouped as shown in a block 910. Tile data having an ID 2 may be grouped as shown in a block 920. Tile data having an ID 15 may be grouped as shown in a block 930. Tile data having an ID 16 may be grouped as shown in a block 940.

The grouped tile data having the same ID may be MVC-compressed and stored together. Referring to a block 950, when one frame is split into 16 tiles, 16 data sets 910, 920, ..., 930, and 940 may be generated. Herein, a block, e.g., the block 910, is a data set including frames corresponded to the same ID. Herein, the data sets may be generated as different streams. For example, the data set 910 corresponding to the ID 1 may be generated as one stream, and the data set 920 corresponding to the ID 2 may be generated as another stream.

The data sets shown in the block 950 may be stored in the video storage apparatus 310 and be selectively extracted and streamed to the display apparatus 350.

FIG. 10 is a diagram for describing an operation of streaming video data from a video storage apparatus 1020 to a display apparatus 1030. In FIGS. 7 and 10, like reference numerals denote like elements. A media storage medium 1005 corresponds to the media storage medium 405 illustrated in FIG. 4. The video storage apparatus 1020 and the display apparatus 1030 illustrated in FIG. 10 correspond to the above-described video storage apparatus 310 or 400 and the display apparatus 350 (e.g., a HMD), respectively. In FIG. 10, for example, the video storage apparatus 1020 is a media player which operates by receiving the media storage medium 1005 inserted thereinto.

A communicator 1025 of the video storage apparatus 1020 and a communicator 1040 of the display apparatus 1030 illustrated in FIG. 10 correspond to the communicator 320 or 440 of the video storage apparatus 310 or 400 and the communicator 370 of the display apparatus 350, respectively.

The controller 315 may stream at least one tile data of a 3D 360° video, which corresponds to a FoV, to the display apparatus 350.

Referring to FIG. 10, tiles corresponding to a first area 720 and 740 corresponding to a FoV of the user 705 may have IDs 7, 8, 11, and 12, and video data 1015 corresponding to the first area 720 and 740 may include tile data having the IDs 7, 8, 11, and 12. The plurality of data sets 950 of FIG. 9, which have different tile IDs, may be stored in the media storage medium 1005. Alternatively, the plurality of data sets 950 may be stored in the memory 325 described above in relation to FIG. 3A.

The controller 315 may steam at least one tile data corresponding to a certain area (e.g., the first area 720 and 740) corresponding to a certain viewpoint through the communicator 1025 to the communicator 1040 of the display apparatus 1030. Accordingly, the display apparatus 1030 may receive the video data as video data 1035 corresponding to the first area 720 and 740 may include tile data having the IDs 7, 8, 11, and 12.

As described above, when the certain area (e.g., a 1/4 area of a whole original area) corresponding to the certain viewpoint is selectively streamed, a resolution of an original 3D 360° video may be constantly maintained and the amount of streamed data may be reduced to 25% of original video data.

Therefore, in an embodiment of the disclosure, a high-resolution video may be streamed without exceeding a data transfer rate supportable by a wireless network.

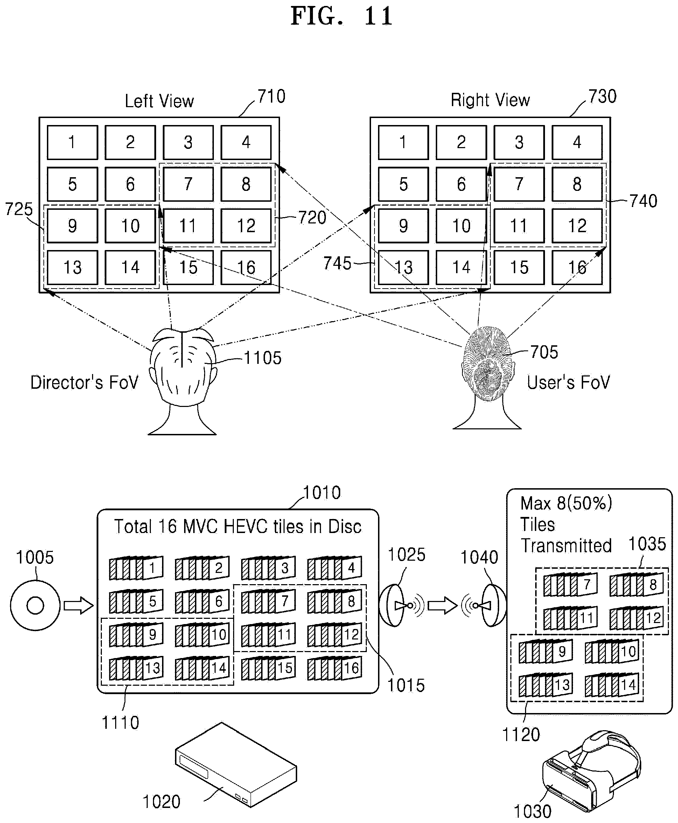

FIG. 11 is a diagram for describing another operation of streaming video data from the video storage apparatus 1020 to the display apparatus 1030.

In an embodiment of the disclosure, video data corresponding to a whole 3D 360° video is not streamed. Specifically, in an embodiment of the disclosure, the video storage apparatus 1020 may selectively stream only tile data corresponding to a plurality of FoVs corresponding to a plurality of viewpoints to the display apparatus 1030. Herein, the plurality of FoVs may include a first area and at least one second area different from the first area. In FIG. 11, for example, the at least one second area includes one area.

In FIG. 11, for example, two different FoVs are present in an original 3D 360° video. The two different FoVs may include the first area 720 and 740 and a second area 725 and 745.

As described above, information about the first area 720 and 740 may be acquired by the display apparatus 1030 based on a detection result of a sensor (e.g., the sensor 360 or 650) included in the display apparatus 1030. The display apparatus 1030 may transmit the information about the first area 720 and 740 to the video storage apparatus 1020.

On the other hand, information about the second area 725 and 745 may be acquired based on a FoV designated by a director 1105 who is a producer of content configured as the 3D 360° video (e.g., a director's FoV) . In the following description, for example, content corresponding to video data is a movie. In the case of a movie, a FoV capable of best representing a plot of the movie based on intention of the director 1105 may be set as the second area 725 and 745. In this case, the information about the second area 725 and 745 may include an ID of at least one tile included in the second area 725 and 745. When content is produced, the director 1105 may set the second area 725 and 745 and store the information about the second area 725 and 745 in memory (e.g., memory in a media recording medium, a server, or a video storage apparatus) together with video data corresponding to the content. Alternatively, the information about the second area 725 and 745a may be received from outside when the video storage apparatus 1020 reads or acquires the video data corresponding to the content.

The video storage apparatus 1020 may acquire information about the first area 720 and 740 and information about the second area 725 and 745, and set priorities of a plurality of tiles corresponding to the first area 720 and 740 and the second area 725 and 745.

When content is reproduced using a HMD, providing of an area of a 3D 360° video, which the user 705 desires to view, is meaningful and thus a video corresponding to a FoV of the user 705 needs to be preferentially reproduced.

Therefore, the video storage apparatus 1020 may stream at least one tile corresponding to the first area 720 and 740 to the display apparatus 1030 with the highest priority compared to the other tiles, such that the display apparatus 1030 may preferentially display the first area 720 and 740.

The user 705 may view the first area 720 and 740 corresponding to the FoV and change a viewpoint to view another area. In this case, the area, which the user 705 desires to view from the changed viewpoint, may probably be the second area 725 and 745 corresponding to the FoV designated by the director 1105, because the director 1105 may, for example, set an area capable of best representing a plot of a movie, as the director's FoV. For example, the director's FoV may be set as an area including a main character, an area including a main space of the movie, or a meaningful area considering the plot of the movie.

Therefore, priorities of tile data to be streamed from the video storage apparatus 1020 to the display apparatus 1030 may be set based on the FoV of the user 705 of the display apparatus 1030 and the FoV set by the producer of the content corresponding to the video data (e.g., the director 1105).

The priorities of the tile data to be streamed from the video storage apparatus 1020 to the display apparatus 1030 may be set based on a FoV history of users who have viewed the content corresponding to the video data. For example, when the video storage apparatus 1020 is a server for providing contents based on streaming services, the video storage apparatus 1020 would have provided content streaming services to various users. In this case, assuming that the video storage apparatus 1020 splits an original video into a plurality of tile units and streams tile data, the video storage apparatus 1020 may have stored therein a history of tile data transmitted to a plurality of users. That is, when tile data having IDs 7, 8, 11, and 12 is transmitted to a first user, tile data 1110 having IDs 9, 10, 13, and 14 is transmitted to a second user, and the tile data 1110 having the IDs 9, 10, 13, and 14 is transmitted to a third user at a certain timing, the video storage apparatus 1020 may store a history of the IDs of the tile data transmitted to the plurality of users, and extract a plurality of tile IDs from the accumulated history in the order of transmission frequency. The video storage apparatus 1020 may set priorities of one or more second areas based on the accumulated viewing history.

For example, based on the accumulated viewing history, it may be determined that tile data 1110 having tile IDs 9, 10, 13, and 14 has been the most frequently streamed and tile data having tile IDs 6, 7, 10, and 11 has been the second most frequently streamed. In this case, a second-1 area having the tile IDs 9, 10, 13, and 14 may be set to have a higher priority and a second-2 area having the tile IDs 6, 7, 10, and 11 may be set to have a lower priority.

As another example, the priorities may be set based on an automatic content recognition (ACR) result with respect to the content corresponding to the video data. Priorities of a plurality of partial areas may be determined in the order of areas including major objects on a screen based on the ACR result. For example, when a second-1 area of a screen includes a main character of the movie and a second-2 area includes a supporting character of the movie, the video storage apparatus 1020 or the producer of the content may automatically recognize the second-1 area and the second-2 area and give priorities in the order of the second-1 area and the second-2 area.

The priorities may be set based on at least one of a character location of the content corresponding to the video data or a plot of the content.

As described above, the video storage apparatus 1020 may stream a plurality of tile data corresponding to a plurality of areas to the display apparatus 1030 based on the set priorities.

As described above in relation to FIG. 11, when tile data corresponding to a plurality of partial areas (e.g., the first area 720 and 740 and the second area 725 and 745) is selectively streamed to the display apparatus 1030, although the user 705 of the display apparatus 1030 change a current FoV to view another area, data corresponding to the area newly viewed by the user 705 of the display apparatus 1030 does not need to be newly requested and may be immediately displayed. Therefore, a video corresponding to a FoV may be flexibly reproduced to better comply with intention of the user 705 of the display apparatus 1030.

Although the first area 720 and 740 and the second area 725 and 745 do not overlap with each other in FIG. 11, the first area 720 and 740 and the second area 725 and 745 may partially overlap. For example, an area having tile IDs 7, 8, 11, and 12 may serve as a first area, and an area having tile IDs 6, 7, 10, and 11 may serve as a second area. As described above, a priority of tiles corresponding to the first area is higher than a priority of tiles corresponding to the second area. As such, in this case, the video storage apparatus 1020 streams tile data having the tile IDs 7, 8, 11, and 12 and corresponding to the first area to the display apparatus 1030, and then streams tile data having the tile IDs 6, 7, 10, and 11, to the display apparatus 1030. However, when the tile data having the tile IDs 6, 7, 10, and 11 is streamed to the display apparatus 1030, the tile data having the tile IDs 7 and 11 has already been transmitted as the tile data corresponding to the first area and thus only the non-transmitted tile data having the tile IDs 6 and 10 may be transmitted.

The display apparatus 1030 may receive and store the streamed tile data based on information about the priorities, which is transmitted from the video storage apparatus 1020. Specifically, the display apparatus 1030 may preferentially receive and store tile data having a higher priority, and then receive and store tile data having a lower priority. According to an embodiment, the display apparatus 1030 may receive and store the streamed tile data as video data 1035 corresponding to the first area 720 and 740 including tile data having the IDs 7, 8, 11, and 12 and video data 1120 corresponding to the second area 725 and 745 including tile data having the IDs 9, 10, 13, and 14.

The information about the priorities may be transmitted to the display apparatus 1030 as a stream different from a stream of the tile data. For example, the video storage apparatus 1020 may initially transmit the stream including the information about the priorities, to the display apparatus 1030 and then transmit at least one stream corresponding to the tile data to the display apparatus 1030. For example, the information about the priorities may be included in metadata to be included in a stream different from the stream of the tile data.

The information about the priorities may be included in a part of the stream including the tile data. For example, the information about the priorities may be inserted into a header included in the stream. As another example, when the tile data is transmitted as a stream including groups of pictures (GOPs), the information about the priorities may be inserted into a header of each GOP.

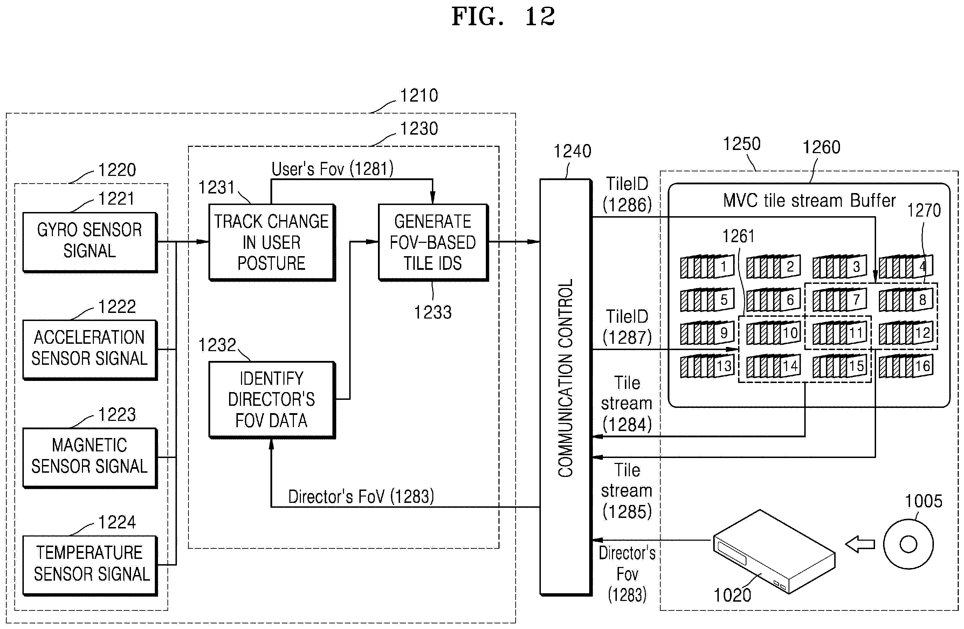

FIG. 12 is a diagram for describing another operation of streaming video data from the video storage apparatus 1020 to a display apparatus 1210.

In FIG. 12, the video storage apparatus 1020 and the display apparatus 1210 correspond to the video storage apparatus 310 or 400 illustrated in FIG. 3A or 4 and the display apparatus 350 illustrated in FIG. 3B, respectively. Thus, the descriptions provided above in relation to FIGS. 3A to 11 will not be repeated to describe operations between the video storage apparatus 1020 and the display apparatus 1210 illustrated in FIG. 12. Tile data included in a block 1260 illustrated in FIG. 12 corresponds to the tile data included in a block 1010 illustrated in FIG. 10. The operations illustrated in FIG. 12 will now be described with reference to the elements of the video storage apparatus 310 illustrated in FIG. 3A and the display apparatus 350 illustrated in FIG. 3B.

Elements included in the display apparatus 1210 of FIG. 12 are not physical elements of the display apparatus 1210 but are elements for describing operations performed by the display apparatus 1210. Elements included in a block 1250 are not physical elements of the video storage apparatus 1020 but are elements for describing operations performed by the video storage apparatus 1020.

Referring to FIG. 12, the sensor 360 may acquire a signal 1220 indicating a detection result of at least one sensor. Specifically, the signal 1220 may include at least one of a signal 1221 indicating a detection result of a gyro sensor, a signal 1222 indicating a detection result of an acceleration sensor, a signal 1223 indicating a detection result of a magnetic sensor, or a signal 1224 indicating a detection result of a temperature sensor. The signal 1220 may further include at least one signal for determining a viewpoint of a user or a FoV of the user.

The controller 1230 of the display apparatus 350 tracks (1231) a posture of the user or a change in the posture based on the acquired signal 1220. As a result of the tracking (1231), a user's FoV (1281) may be determined. Thereafter, the controller 1230 may generate (1233) tile IDs corresponding to the user's FoV 1281. Herein, the tile IDs corresponding to the user's FoV (1281) may correspond to 'information about a first area' as described above. In FIG. 11, for example, the tile IDs generated based on the user's FoV 1281 may include 'tile IDs: 7, 8, 11, and 12'. The display apparatus 1210 may transmit 'tile IDs: 7, 8, 11, and 12' information 1286 corresponding to the information about the first area to the video storage apparatus 1020 under communication control (1240) of the communicator 320. Then, the video storage apparatus 1020 may transmit (1285) tile data 1270 corresponding to the 'tile IDs: 7, 8, 11, and 12' to the display apparatus 1210 based on the received 'tile IDs: 7, 8, 11, and 12' information 1286.

Video data stored in the video storage apparatus 1020 may include a plurality of data sets corresponding to a plurality of tile IDs as shown in the block 1260. The video storage apparatus 1020 may acquire information about a director's FoV corresponding to at least one second area different from the first area. Referring to FIG. 12, information about the director's FoV may correspond to 'information about the second area'. Referring to the block 1260 of FIG. 12, tile IDs indicating the director's FoV may include 'tile IDs: 10, 11, 14, and 15'. The video storage apparatus 1020 may transmit information 1283 indicating the director's FoV, to the display apparatus 1210. The video storage apparatus 1020 may transmit tile data 1261 corresponding to the director's FoV (i.e., the second area) to the display apparatus 1210. In addition, the display apparatus 1210 may identify a director's FoV (1232) based on the received information 1283 indicating the director's FoV.

The display apparatus 1210 may transmit 'tile IDs: 10, 11, 14, and 15' information (1287) corresponding to the information about the second area to the video storage apparatus 1020 under communication control (1240) of the communicator 320. Then, the video storage apparatus 1020 may transmit (1284) tile data 1261 corresponding to the 'tile IDs: 10, 11, 14, and 15' to the display apparatus 1210 based on the received 'tile IDs: 10, 11, 14, and 15' information 1287.

The display apparatus 1210 may receive the tile data 1270 corresponding to the first area and the tile data 1261 corresponding to the second area. In this case, the display apparatus 1210 may preferentially receive and store the tile data 1270 corresponding to the first area and then receive and store the tile data 1261 corresponding to the second area based on priorities.

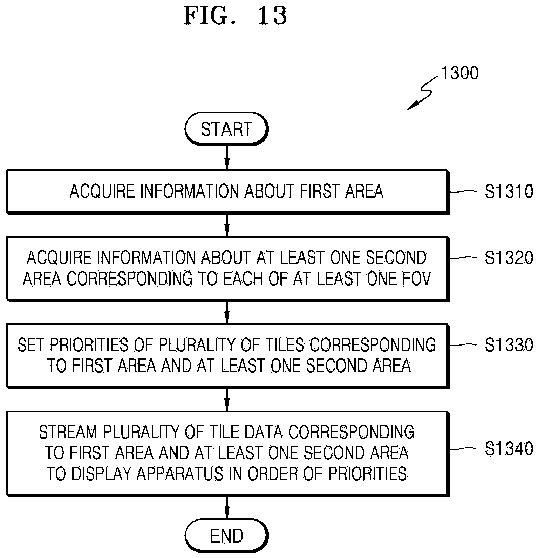

FIG. 13 is a flowchart of a method 1300 of transmitting 3D 360° video data, according to an embodiment of the disclosure. The method 1300 according to an embodiment of the disclosure includes at least one operation corresponding to operations performed by at least one display apparatus and at least one video storage apparatus described above in relation to FIGS. 1 to 12. The method 1300 according to an embodiment of the disclosure may have configurational features of at least one display apparatus and at least one video storage apparatus described above in relation to FIGS. 1 to 12.

Thus, the descriptions provided above in relation to FIGS. 1 to 12 will not be repeated to describe the method 1300 illustrated in FIG. 13. In the following description, for example, a streaming method is used as a data transmission method.

Referring to FIG. 13, the method 1300 is a method of splitting a 3D 360° video into a plurality of tile units and streaming video data of the tile units from a video storage apparatus to a display apparatus.

Referring to FIG. 13, information about a first area of the 3D 360° video, the first area corresponding to a FoV corresponding to a viewpoint of a user of the display apparatus, is acquired (S1310). Operation S1310 may be performed by the display apparatus 350.

Information about at least one second area of the 3D 360° video, the at least one second area being different from the first area and corresponding to at least one viewpoint, is acquired (S1320). Operation S1320 may be performed by the video storage apparatus 310.

Thereafter, priorities of a plurality of tiles corresponding to the first area and the at least one second area are set (S1330). Operation S1330 may be performed by the video storage apparatus 310. Alternatively, the display apparatus 350 may autonomously set the first area corresponding to the user's FoV of the display apparatus 350 as having the highest priority, and set the second area corresponding to a director's FoV as having a lower priority.

A plurality of tile data corresponding to the plurality of tiles corresponding to the first area and the at least one second area are streamed from the video storage apparatus to the display apparatus in the order of the priorities (S1340). Operation S1340 may be performed by the video storage apparatus 310.

The display apparatus 350 may separately receive and store the plurality of tile data corresponding to the plurality of tiles corresponding to the first area and the at least one second area in the order of the priorities. Specifically, the display apparatus 350 may preferentially receive and store the tile data having the highest priority, and then receive and store the tile data having the lower priority.

According to another embodiment, the method for streaming video data of a three-dimensional (3D) 360° video from a video storage apparatus may include dividing each of a plurality of frames into a plurality of tiles or sections, determining a first set of tiles or sections, among the plurality of tiles or sections, corresponding to a first area of the 3D 360° video, determining a second set of tiles or sections, among the plurality of tiles or sections, corresponding to a second area of the 3D 360° video.

According to an embodiment, the first area may correspond to a first field of view (FoV) and the second area may correspond to a second FoV. The first FoV corresponds to a viewpoint of a user of the display apparatus and the second FoV corresponds to a view point different from the view point of the user of the display apparatus. For instance, the second FoV may be a viewpoint set by a producer of content corresponding to the video data.

According to an embodiment, the first set of tiles or sections and the second set of tiles or sections may have tiles or sections that overlap. For instance, one or more tiles or sections in the first set of tiles or sections may be common with the second set of tiles or sections.

According to another embodiment, the method for streaming video data of a three-dimensional (3D) 360° video from a video storage apparatus may include dividing each of the plurality of frames into a plurality of sections; determining a first set of sections, among the plurality of sections, corresponding to a first area of the 3D 360° video, the first area corresponding to a first field of view (FoV) of a user of the display apparatus; and transmitting, for each of the plurality of frames, only a portion of the video data corresponding to the first set of sections.

According to the afore-described embodiments of the disclosure, when video data corresponding to content is streamed through a wireless network, a display apparatus may reproduce a high-quality video without increasing a data transfer rate. In addition, only a part of original video data may be streamed fast in such a manner that the display apparatus may promptly and accurately reproduce a FoV desired by a user.

According to an embodiment of the disclosure, a high-resolution 3D 360° video may be transmitted. According to an embodiment of the disclosure, when video data corresponding to content is transmitted through a wireless network, high-quality video data may be transmitted without increasing a data transfer rate.

In addition, according to an embodiment of the disclosure, an area of a 3D 360° video, which corresponds to a viewpoint desired by a user, may be displayed with high image quality. Specifically, only a part of original video data may be transmitted fast in such a manner that a display apparatus may promptly and accurately reproduce a FoV desired by the user.

The afore-described embodiments of the disclosure may be implemented in the form of a computer-readable recording medium including instructions executable by a computer, e.g., a program module executed by a computer. The computer-readable recording medium may be an arbitrary available medium accessible by a computer, and examples thereof include all volatile, nonvolatile media, removable, and non-removable media. The computer-readable recording medium may include both of a computer storage medium and a communication medium. Examples of the computer storage medium include all volatile, nonvolatile media, removable, and non-removable media implemented using an arbitrary method or technology for storing information such as computer-readable instructions, data structures, program modules, or other data. The communication medium generally includes computer-readable instructions, data structures, program modules, other data in a modulated data signal such as a carrier wave, or another transmission mechanism, and includes an arbitrary data transfer medium. Some embodiments of the disclosure may be implemented as a computer program including instructions executable by a computer, e.g., a computer program executed by a computer, or a computer program product.

Particular implementations described above should be considered in a descriptive sense only and not for purposes of limitation. For brevity, descriptions of known electronic configurations, control systems, software, and other functional aspects of the systems may not be provided herein.

## Claims

1. A method transmitting video data of a three-dimensional (3D) 360° video from a video storage apparatus to a display apparatus, the method comprising:
acquiring first information about a first area of the 3D 360° video, the first area corresponding to a first field of view (FoV);
acquiring second information about at least one second area of the 3D 360° video, the at least one second area corresponding to a second FoV different from the first FoV;
setting priorities of a plurality of tiles corresponding to the first area and the at least one second area of the 3D 360° video, the 3D 360° video being divided into the plurality of tiles; and
transmitting a plurality of tile data corresponding to the first area and the at least one second area from the video storage apparatus to the display apparatus in order of the priorities set for the plurality of tiles.

2. The method of claim 1, wherein the setting of the priorities of the plurality of tiles comprises setting a priority of at least one tile corresponding to the first area to be higher than a priority of at least one tile corresponding to the at least one second area.

3. The method of claim 1, wherein the transmitting comprises transmitting, as a first stream, at least one tile data corresponding to at least one tile corresponding to the first area, and transmitting, as a second stream, at least one tile data corresponding to each of the at least one second area.

4. The method of claim 1, wherein the priorities are set based on the first FoV corresponding to a viewpoint of a user of the display apparatus and the second FoV corresponding to a view point set by a producer of content corresponding to the video data.

5. The method of claim 1, wherein the priorities are set based on a FoV history of users who have viewed content corresponding to the video data.

6. The method of claim 1, wherein the priorities are set based on an automatic content recognition (ACR) result with respect to content corresponding to the video data.

7. The method of claim 1, wherein the priorities are set based on at least one of a character location of content corresponding to the video data or a plot of the content corresponding to the video data.

8. The method of claim 1, wherein the 3D 360° video comprises a left-view video, which is a 360° video corresponding to a left view, and a right-view video, which is a 360° video corresponding to a right view, and
wherein the video data is split and encoded in the plurality of tiles based on a motion constrained tile (MCT) technique conforming to high efficiency video coding (HEVC) standards.

9. The method of claim 8, wherein the transmitting comprises:
compressing, into one stream by using a multi-view codec (MVC), at least one tile data corresponding to at least one tile corresponding to the first area of the left-view video and at least one tile data corresponding to at least one tile corresponding to the first area of the right-view video; and
transmitting the one stream to the display apparatus.

10. The method of claim 1, wherein the display apparatus comprises a head-mounted display (HMD).

11. A display apparatus for streaming video data of a three-dimensional (3D) 360° video, the display apparatus comprising:
a display;
a communicator configured to communicate with a video storage apparatus storing the video data;
a controller comprising at least one processor configured to execute one or more instructions to:
control the communicator to receive a plurality of tile data corresponding to a plurality of tiles corresponding to a first area and at least one second area of the 3D 360° video, and information about priorities of the plurality of tiles, the first area corresponding to a first field of view (FoV)and the at least one second area corresponding to a second FoV different from the first FoV, and
control a display to output a video corresponding to at least one of the plurality of tiles based on the information about the priorities of the plurality of tiles.

12. The display apparatus of claim 11, wherein the priorities are set based on the first FoV corresponding to a viewpoint of a user of the display apparatus and the second FoV set by a producer of content corresponding to the video data.

13. The display apparatus of claim 11, wherein the controller is further configured to control a memory to store at least one tile data corresponding to the first area that is preferentially received based on the information about the priorities.

14. A video storage apparatus for streaming video data of a three-dimensional (3D) 360° video to a display apparatus, the video storage apparatus comprising:
a memory storing the video data;
a communicator configured to communicate with the display apparatus; and
a controller comprising at least one processor configured to execute one or more instructions to
acquire first information about a first area of the 3D 360° video, the first area corresponding to a first field of view (FoV),
acquire second information about at least one second area of the 3D 360° video, the at least one second area corresponding to a second FoV different from the first FoV,
set priorities of a plurality of tiles corresponding to the first area and the at least one second area of the 3D 360° video, the 3D 360° video being divided into the plurality of tiles, and
control a plurality of tile data corresponding to the first area and the at least one second area to be transmitted to the display apparatus in order of the priorities set for the plurality of tiles.

15. A method for streaming video data of a three-dimensional (3D) 360° video from a video storage apparatus to a display apparatus, the method comprising:
receiving a plurality of tile data corresponding to a plurality of tiles corresponding to a first area and at least one second area of the 3D 360° video, the first area corresponding to a first field of view (FoV) and the at least one second area corresponding to a second FoV different from the first FoV,
receiving information about priorities of the plurality of tiles, and
cXontrolling a display to output a video corresponding to at least one of the plurality of tiles based on the information about the priorities of the plurality of tiles.
